# EUROPÄISCHE PATENTSCHRIFT

(11) **EP 3 776 772 B1**
(45) Veröffentlichungstag und Bekanntmachung des Hinweises auf die Patenterteilung: **21.12.2022**
(21) Anmeldenummer: 19714197.1
(22) Anmeldetag: 26.03.2019
(51) Int. Cl.: H02G 3/04, F16G 13/16, H02G 11/00

(54) **TRENNSTEG FÜR EINE ENERGIEFÜHRUNGSKETTE**
SEPARATING WEB FOR AN ENERGY CHAIN
BANDE DE SÉPARATION POUR UNE CHAÎNE PORTE-CÂBLES

(30) Priorität: 26.03.2018 DE 202018101686 U
(43) Veröffentlichungstag der Anmeldung: 17.02.2021
(73) Patentinhaber: Igus GmbH, 51147 Köln (DE)
(72) Erfinder: STRACK, Stefan, 53639 Königswinter (DE); BARTEN, Dominik, 53340 Meckenheim (DE)
(74) Vertreter: Lippert Stachow Patentanwälte Rechtsanwälte
(86) Internationale Anmeldenummer: PCT/EP2019/057643
(87) Internationale Veröffentlichungsnummer: WO 2019/185662

(56) Entgegenhaltungen:
- DE-U1-202017 100 200
- Igus: "New and proven 2017 Igus", , 24. November 2017 (2017-11-24), Seiten 1-119, XP055585153, Gefunden im Internet: URL:https://www.igus.nl/contentData/Produc t_Files/Download/pdf/EN-DE_News2017_the-ch ain_web.pdf [gefunden am 2019-05-02]

## Beschreibung

Die Erfindung betrifft einen Trennsteg für eine Energieführungskette aus schwenkbar miteinander verbundenen Kettengliedern, welche zwei Seitenlaschen aufweisen, die zumindest bei einigen Kettengliedern durch zwei Querstege miteinander verbunden sind und einen Führungskanal für Leitungen definieren, bei welcher Trennstege, zwischen den Querstegen angeordnet werden können und an mindestens einem der Querstege arretierbar sind, sowie im Wesentlichen senkrecht zu den Trennstegen plattenartige Fachböden angeordnet werden können. Hierzu hat der Trennsteg mindestens eine, meist mehrere Ausnehmungen, in denen jeweils ein Fachboden gehaltert werden kann und wobei an einem seitlichen Ende jeder Ausnehmung ein durchgehender, steifer Stützbereich und an dem gegenüberliegenden seitlichen Ende je eine mit der jeweiligen Ausnehmung verbundene Einführöffnung zum Einsetzen eines Fachbodens vorgesehen sind und wobei die Einführöffnungen mit je einem federnden Zungenelement zum teilweisen Verschließen der jeweiligen Einführöffnung und zum Festhalten des jeweiligen eingesetzten Fachbodens versehen sind.

Energieführungsketten dienen zur zuverlässigen und sicheren Führung von flexiblen Versorgungsleitungen, die zwei relativ zueinander bewegliche Anschlussstellen miteinander verbinden.

Die Erfindung betrifft ebenfalls eine Energieführungskette ausgerüstet mit Trennstegen.

Eine bekannte, gattungsgemäßen Energieführungskette ist in DE 20 2017 100 200 U1 bzw. WO 2018/130721 A1 beschrieben.

Hier werden bereits für die Innenaufteilung des Führungskanals vertikale Trennstege und horizontale Fachböden verwendet, wobei die Fachböden in Ausnehmungen der Trennstege gehaltert sind. Bei einer speziellen Ausführungsform des in WO 2018/130721 A1 beschriebenen Trennstegs (vgl. FIG.4A-4B) ist die Einführöffnung mit einem federnden Zungenelement teilweise verschlossen, wobei zum Einsetzen des jeweiligen Fachbodens in die Ausnehmung des Trennstegs das Zungenelement ausgelenkt wird, während es nach dem seitigen Einschieben des Fachbodens zurückschnappt und den Fachboden in der Ausnehmung arretiert. Eine solche Konstruktion ist vorteilhaft, jedoch lässt sich diese Konstruktion weiter verbessern.

Ausgehend von diesem Stand der Technik liegt der Erfindung die Aufgabe zugrunde, die Halterung der Fachböden in dem Trennsteg weiter zu optimieren und insbesondere den Ein- und Ausbau der Fachböden zu erleichtern bzw. zu beschleunigen.

Erfindungsgemäß wird diese Aufgabe gelöst durch einen Trennsteg nach Anspruch 1 bzw. eine Energieführungskette nach Anspruch 12.

Erfindungsgemäß wird die Aufgabe bereits dadurch gelöst, dass das federnde Zungenelement sich im Wesentlichen von der Einführöffnung aus bis zu dem gegenüberliegenden steifen Stützbereich des Trennstegs erstreckt, dass das eine Ende des Zungenelements mit dem Rand der Einführöffnung und das andere Ende mit dem Stützbereich verbunden ist und dass auf derjenigen Seite des Zungenelements, die der Ausnehmung abgewandt ist, ein Freiraum vorgesehen ist, in den das federnde Zungenelement beim Einsetzen und Herausnehmen des jeweiligen Fachbodens elastisch ausweichen kann.

Aufgrund der erfindungsgemäßen Merkmale ist es möglich, die Fachböden relativ leicht in die Ausnehmungen der Trennstege seitlich bzw. in Längsrichtung der Energieführungsketteeinzudrücken, wobei diese mittels des federnden Zugelements fest in der Ausnehmung des Trennstegs gehalten werden. Zum Herausnehmen der Fachböden brauchen diese lediglich aus den Ausnehmungen entgegengesetzt herausgezogen zu werden, ohne dass dazu Werkzeug erforderlich ist.

Ein Kernaspekt der Erfindung liegt somit in der besonderen Gestaltung mindestens eines federnden Zungenelements des Trennstegs, mit welchem trotz vereinfachtem Ein- und Ausbau der Fachböden eine zuverlässige Halterung der Fachböden erzielbar ist.

Der Stützbereich ist in Bezug auf die Hauptebene des Trennstegs steif, insbesondere biegesteif, ausgeführt, nämlich so dass dieser bestimmungsgemäß beim Einsetzen und Herausnehmen eines Fachbodens keine Biegung erfährt. Dies kann insbesondere durch geeignete Dimensionierung erreicht werden, indem der Stützbereich jeweils an die Ausnehmung(en) angrenzend eine ausreichende Materialstärke aufweist, welche bspw. um ein Mehrfaches grösser ist als die Materialdicke des bzw. der bestimmungsgemäß biegsamen Zungenelemente.

Vorzugsweise ist der Trennsteg aus Kunststoff hergestellt. Dies hat den Vorteil, dass der Trennsteg als einstückiges Teil ausgebildet sein kann und preiswert, z.B. in Spritzgusstechnik, herstellbar ist. Zudem kann damit inhärent durch geeignete Dimensionierung die gewünschte elastische Verformbarkeit des bzw. der Zungenelemente erzielt werden.

Bei dieser Konstellation kann auch das elastisch verformbare Zungenelement an den Trennsteg angeformt sein, und zwar dergestalt, dass das eine Ende des Zungenelements einstückig an den Rand der Einführöffnung und das andere Ende ebenfalls einstückig an den Stützbereich angeformt ist.

Die dem federnden Zungenelement gegenüberliegende Begrenzungswand der Ausnehmung ist zweckmäßig der äußeren Kontur des einzusetzenden plattenförmigen Fachbodens angepasst, so dass dieser in stabiler Ausrichtung fest in dem Trennsteg verankerbar ist. Vorzugsweise ist dabei das federnde Zungenelement entlang der Längsseite, z.B. oberhalb oder unterhalb, des einzusetzenden Fachbodens angeordnet.

Das federnde Zungenelement weist vorzugsweise auf der der Ausnehmung zugewandten Seite eine vorspringende Nase auf, die zur Verbesserung des Sitzes des Fachbodens in dem Trennsteg dient.

Dabei ist die an dem Zungenelement vorgesehene vorspringende Nase zweckmäßig nahe dem inneren Ende der Einführöffnung angeordnet, so dass der Sitz des Fachbodens und damit sein Halt in der Ausnehmung optimal gestaltet ist.

Um den stabilen Sitz des Fachbodens in der Ausnehmung des Trennstegs noch weiter zu optimieren, kann die vorspringende Nase bei eingesetztem Fachboden im Bereich des der Einführöffnung zugewandten Endes des Fachbodens unter Vorspannung an diesem anliegen.

Die Montage der Fachböden wird erleichtert, wenn alle Einführöffnungen bzw. Ausnehmungen des jeweiligen Trennstegs zu derselben Schmalseite des Trennstegs hin öffnen. Die Schmalseite liegt dem Stützbereich gegenüber.

Für die elastische Verformung förderlich ist eine bevorzugte Gestaltung, in welcher die Hauptabmessung des zugeordneten Freiraums grösser ist als die entsprechende Hauptabmessung der zugehörigen Ausnehmung. Besonders bevorzugt beträgt die Hauptabmessung (ggf. entlang einer gekrümmten Linie) mindestens 60%, insbesondere mindestens 65%, der maximalen Abmessung des Trennstegs in Kettenlängsrichtung, gemessen am mittleren Bereich des Trennstegs bzw. auf Höhe der zugehörigen Ausnehmung (d.h. nicht am oberen bzw. unteren Befestigungsbereich für die Querstege).

Das Zungenelement weist auf der der Ausnehmung zugewandten Seite einen Rastvorsprung auf, zum Festhalten eines Fachbodens in Richtung quer zur Kettenlängsrichtung bzw. in Richtung senkrecht zur Hauptebene des Trennstegs. Somit kann das Zungenelement nicht nur zur Halterung in der Ausnehmung gegen eine Verschiebung des Fachbodens in Kettenlängsrichtung, sondern auch zur Arretierung des Fachbodens in Richtung quer zur Kettenlängsrichtung dienen. Auf eine bspw. aus DE 20 2017 100 200 U1 vorbekannte separate "Haltefeder" oberhalb/unterhalb der Ausnehmung kann dadurch verzichtet werden.

Alle vorgenannten bevorzugten Merkmale betreffen auch den Trennsteg als Teil einer Energieführungskette, , aus schwenkbar miteinander verbundenen Kettengliedern, welche zwei Seitenlaschen aufweisen, die zumindest bei einigen Kettengliedern durch zwei Querstege miteinander verbunden sind und einen Führungskanal für Leitungen definieren, vertikalen Trennstegen, die zwischen den Querstegen angeordnet und an diesen arretiert sind, sowie horizontalen, plattenartigen Fachböden, die in Ausnehmungen der Trennstege gehaltert sind, wobei an einem seitlichen Ende der Ausnehmungen ein durchgehender, steifer Stützbereich und an dem gegenüberliegenden seitlichen Ende je eine mit der jeweiligen Ausnehmung verbundene Einführöffnung zum Einsetzen eines Fachbodens vorgesehen sind und wobei die Einführöffnungen mit je einem federnden Zungenelement zum teilweisen Verschließen der Einführöffnungen und zum Festhalten des jeweiligen eingesetzten Fachbodens versehen sind.

Die Erfindung ist in der Zeichnung beispielhaft dargestellt und im nachfolgenden im Einzelnen anhand der Zeichnung beschrieben. Es zeigen:
- Fig. 1:: einen Schnitt durch ein Ausführungsbeispiel einer Energieführungskette,
- Fig. 2:: einen Schnitt entlang der Linie II-II aus Fig. 1,
- Fig. 3:: eine Ansicht des isoliert dargestellten Trennstegs,
- Fig. 4:: den Trennsteg gemäß Fig. 3 in perspektivischer Darstellung,
- Fig. 5:: eine ähnliche Darstellung des Trennstegs wie in Fig. 3, wobei das Einsetzen der Fachböden veranschaulicht wird,
- Fig. 6:: eine perspektivische Darstellung der Fig. 5,
- Fig. 7:: eine Darstellung des Trennstegs mit komplett eingesetzten Fachböden und
- Fig. 8:: eine perspektivische Darstellung der Fig. 7.

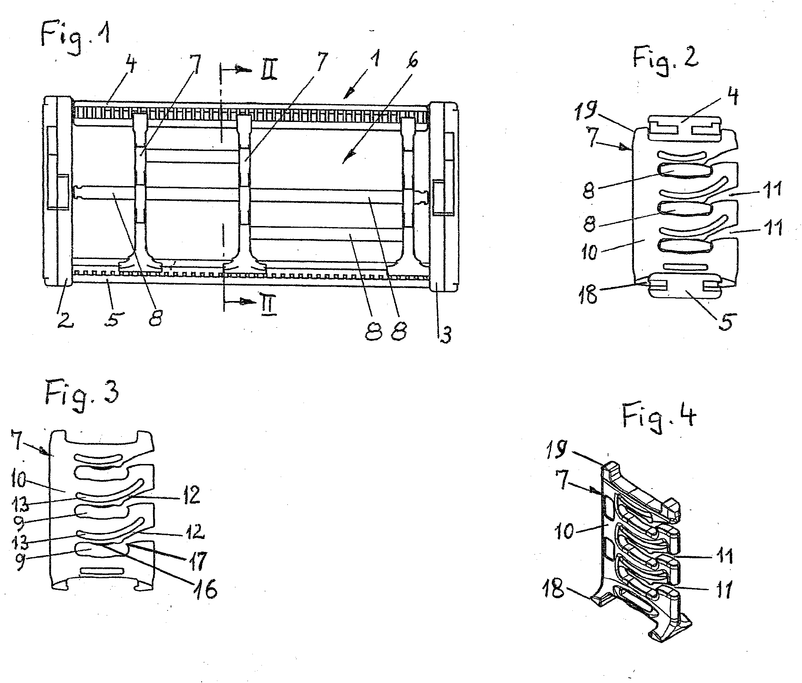

In Fig. 1 der Zeichnung ist ein Querschnitt durch ein Ausführungsbeispiel einer erfindungsgemäßen Energieführungskette 1 im Bereich eines Kettenliedes dargestellt. Jedes Kettenlied weist zwei Seitenlaschen 2 und 3 auf, die durch zwei Querstege miteinander verbunden sind, und zwar durch einen oberen Quersteg 4 und einen unteren Quersteg 5. Durch die Seitenlaschen 2 und 3 und die Querstege 4 und 5 wird ein Führungskanal 6 zur Aufnahme und Führung flexibler Leitungen, wie z.B. Kabeln, Schläuchen und dergleichen, gebildet. Die Querstege 4, 5 können sog.

Öffnungsstege (hier gleichbedeutend mit Quersteg) sein, oder z.B. einteilig mit einer Seitenlasche 2, 3 hergestellt sein. Ein Öffnungssteg kann bspw. an einer Seitenlasche 2, 3 schwenkbar gelagert sein und mit der anderen Seitenlasche 2, 3 verrastbar oder mit beiden Seitenlaschen 2, 3 lösbar verrastet sein.

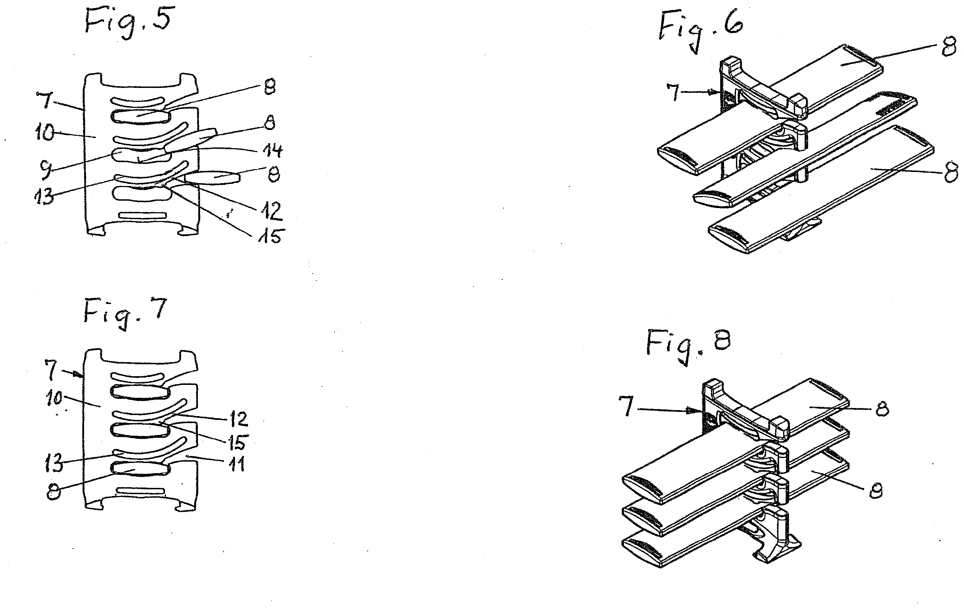

Zur Innenaufteilung ist es bekannt, wie in Fig. 1 dargestellt, vertikale Trennstege 7 und horizontale Fachböden 8 einzusetzen. Die vertikalen Trennstege sind zwischen den Querstegen 4 und 5 angeordnet und sind an diesen gehaltert. Die horizontalen Fachböden 8, die plattenartig ausgebildet und parallel zu den Querstegen 4 und 5 angeordnet sind, sind in Ausnehmungen 9 der Trennstege 7 gehaltert, wie aus den Figuren 2 und 5 bis 8 anschaulich hervorgeht.

Jeder Trennsteg 7 hat zwei Haltebereiche je zur Halterung an dem jeweiligen Quersteg 4, 5. In dargestellten Beispielen sind die Haltebereiche ein Haltefuß 18 und ein Haltekopf 19. Der Haltefuß 18 ist zum Arretieren bzw. Verrasten an einem Quersteg 5 ausgebildet, insbesondere auch gegen Verschiebung in Querrichtung entlang des Querstegs 5, wie in FIG.2 zu sehen. Der Haltekopf 19 liegt im eingebauten Zustand des Trennstegs 7 an dem Quersteg 4 in Längsrichtung gehalten, ohne zu verrasten. Wenn die Energieführungskette Öffnungsstege hat, ist es vorteilhaft, wenn der Trennsteg 7 so eingebaut ist, dass der Haltekopf 19 an einem Öffnungssteg anliegt, sodass der Öffnungssteg unkompliziert zur Wartungszwecken geöffnet werden kann. Der Haltefuß 18 und der Haltekopf 19 halten jeweils den Trennsteg 7 in Einbaulage, d.h. bei geschlossenem Kettenglied in Längsrichtung unverlierbar an den gegenüberliegenden Querstegen 4, 5.

Jeder Trennsteg 7 hat einen plattenartigen mittleren Bereich, welcher die Ausnehmungen 9 in Form von quer zur Hauptebene durchgehenden Durchbrechungen aufweist. In der Hauptebene des Trennstegs 7 (vgl. FIG.2/FIG.3) liegt die Breitenrichtung und die Höhenrichtung des Trennstegs 7, wobei die Breitenrichtung der Längsrichtung der Energieführungskette 1 entspricht und die Höhenrichtung der Richtung senkrecht dazu und senkrecht zur Querrichtung entspricht. An einem der seitlichen Enden der Ausnehmungen 9 ist ein durchgehender vertikaler steifer Stützbereich 10 vorgesehen, der sich über die gesamte Höhe des Trennstegs 7 und der im Wesentlichen nicht flexibel ist. An dem gegenüberliegenden seitlichen Ende der jeweiligen Ausnehmung 9 ist je eine mit der Ausnehmung 9 verbundene Einführöffnung 11 vorgesehen, die zum Einsetzen eines Fachbodens 8 dient. Die seitlichen Einführöffnungen 11 sind jeweils mit einem federnden Zungenelement 12 kombiniert, welches die jeweilige Einführöffnung 11 teilweise verschließt und dafür sorgt, dass der jeweilige eingesetzte Fachboden 8 nach dem seitlichen Einsetzen durch die Einführöffnungen 11 stramm in der jeweiligen Ausnehmung 9 der Trennstege 7 sitzt.

Das federnde Zungenelement 12 erstreckt sich von der Einführöffnung 11 bis zu dem gegenüberliegenden steifen Stützbereich 10 des Trennstegs 7, wobei das eine Ende des Zungenelements 12 mit dem Rand der jeweiligen Einführöffnung 11 und das andere Ende mit dem steifen Stützbereich 10 einstückig verbunden ist.

Auf derjenigen Seite des Zungenelements 12, welches der Ausnehmung 9 abgewandt ist, ist ein Freiraum 13 vorgesehen, in den das federnde Zungenelement 12 beim Einsetzen und Herausnehmen des jeweiligen Fachbodens 8 elastisch ausweichen kann und im eingesetzten Zustand des jeweiligen Fachbodens 8 diesen fest in der Ausnehmung 9 hält.

Die Trennstege 7 sind aus elastisch verformbarem, sehr stabilem Kunststoff hergestellt. Dadurch können die Trennstege jeweils als einstückiges Teil ausgebildet sein, wobei auch die elastischen Zungenelemente 12 unmittelbar an das Material des Trennstegs 7 einstückig angeformt sein können. Das eine Ende des jeweiligen Zungenelements 12 ist dabei an den Rand der jeweiligen Einführöffnung 11 und das andere Ende an den vertikalen Stützbereich 10 angeformt. Die Trennstege 7 können insbesondere im Spritzgussverfahren hergestellt werden.

Die dem federnden Zungenelement 12 gegenüberliegende Begrenzungswand 14 der jeweiligen Ausnehmung 9 ist der äußeren Kontur des einzusetzenden plattenförmigen Fachbodens 8 angepasst, so dass die Fachböden fest und sicher in den Ausnehmungen 9 sitzen und mittels der federnden Zungenelemente 12 in den Ausnehmungen stabil und unverlierbar festgelegt sind.

In dem in der Zeichnung dargestellten Ausführungsbeispiel sind die federnden Zugelemente 12 oberhalb der einzusetzenden Fachböden 8 angeordnet. Alternativ wäre es selbstverständlich auch möglich, die relative Position der Zungenelemente 12 zu den Fachböden 8 umzudrehen, zumal beim Umkehren der Energieführungskette im Umlenkbogen in die entgegengesetzte Richtung, oben und unten vertauscht werden. Im dargestellten Ausführungsbeispiel sind die federnden Zugelemente 12 an der Seite der jeweiligen Ausnehmung 9 angeordnet, die dem Haltekopf 19 zugewandt ist.

Die federnden Zungenelemente 12 weisen jeweils auf der der jeweiligen Ausnehmung 9 zugewandten Seite eine vorspringende Nase 15 auf, die die eingesetzten Fachbehörden noch zusätzlich in den Ausnehmungen stabilisieren.

Die an den Zungenelementen 12 vorgesehenen vorspringenden Nasen 15 sind nahe dem inneren Ende der Einführöffnung 11 angeordnet, so dass dadurch der Sitz der Fachböden 8 in den Ausnehmungen 9 zusätzlich gesichert wird, so dass einem ungewollten Herausrutschen der Fachböden 8 aus den Ausnehmungen 9 in Längsrichtung der Energieführungskette 1 entgegengewirkt wird. Diese zusätzliche Sicherheit wird insbesondere dadurch bewirkt, dass die vorspringende Nase 15 im Bereich des der Einführöffnung 11 zugewandten Endes des Fachbodens 8 unter Vorspannung an diesem anliegt.

Wie in der FIG. 3 besonders gut zu sehen ist, weist das Zungenelement 12 auf der der Ausnehmung 9 zugewandten Seite einen Rastvorsprung 16 auf, der einen eingesetzten Fachboden 8 in Richtung quer zur Kettenlängsrichtung bzw. in Richtung senkrecht zur Hauptebene des Trennstegs 7 halten kann.

Das wesentliche an der beschriebenen erfindungsgemäßen Energieführungskette ist die neue Ausbildung der Trennstege, die zur Unterteilung des Führungskanals 6 dienen und eine besonders zuverlässige Halterung für die senkrecht zu den Trennstegen 7 verlaufenden Fachböden 8 bilden.

Das Einsetzen der Fachböden 8 in die Ausnehmungen 9 der Trennstege 7 kann ohne Verwendung von Werkzeugen auf sehr einfache Weise dadurch erfolgen, dass die Fachböden 8 durch die Einführöffnungen 11 in die Ausnehmungen 9 der Trennstege 7 eingedrückt werden, ohne dass der gesamte Trennsteg 7 elastisch verbogen werden muss. Dadurch ist es möglich, ein sehr stabiles Material für die Trennstege zu verwenden.

Auch die Demontage der Fachböden 8 ist sehr einfach und kann ohne die Verwendung von Werkzeugen erfolgen, indem die Fachböden 8 einfach von Hand aus den Ausnehmungen 9 durch die Einführöffnungen 11 herausgezogen werden, wobei sich lediglich das jeweilige federnde Zungenelement 12 verformt und in den dahinter angeordneten Freiraum 13 zurückweicht.

Die Einführöffnungen 11 sind gegenüber der Hauptachse der Ausnehmungen 9 nach oben versetzt, sodass die Einführöffnung 11 außermittig in die Ausnehmung 9 einmündet und dadurch eine Rastkante 17 bildet. Die Rastkante 17 wirkt zusammen mit der Rastnase 15 einem ungewollten Herausrutschen der Fachböden 8 aus den Ausnehmungen 9 in Längsrichtung der Energieführungskette 1 entgegen. Die Einführöffnungen 11 verjüngen sich stetig zu den Ausnehmungen 9 hin und haben eine schiefe Ausrichtung schräg nach oben, in einem Winkel von ca. 10°-25° zur Horizontalen. Die erleichtert das Montieren der Fachböden von einer vorbestimmten Seite der Energieführungskette 1, wobei zumindest an dieser Seite der Quersteg 4, 5 als Öffnungssteg ausgeführt ist.

Die Begriffe vertikal und horizontal sind vorliegend nicht einschränkend auszulegen, sondern gleichbedeutend mit parallel zur Kettenlängsrichtung (=horizontal) bzw. senkrecht zur Kettenlängsrichtung (=vertikal) der Energieführungskette.

### Bezugszeichenliste

- 1: Energieführungskette
- 2: Seitenlasche
- 3: Seitenlasche
- 4: oberer Quersteg
- 5: unterer Quersteg
- 6: Führungskanal
- 7: Trennstege
- 8: Fachböden
- 9: Ausnehmungen (in Trennstegen 7)
- 10: Stützbereich
- 11: Einführöffnung
- 12: federndes Zungenelement
- 13: Freiraum
- 14: Begrenzungswand
- 15: vorspringende Nase
- 16: Rastvorsprung
- 17: Rastkante
- 18: Haltefuß
- 19: Haltekopf

## Patentansprüche

1. Trennsteg (7) für eine Energieführungskette aus schwenkbar miteinander verbundenen Kettengliedern, welche zwei Seitenlaschen (2, 3) aufweisen, die zumindest bei einigen Kettengliedern durch zwei Querstege (4, 5) miteinander verbunden sind und einen Führungskanal (6) für Leitungen definieren, bei welcher Trennstege (7) zwischen den Querstegen (4, 5) angeordnet werden können und an mindestens einem der Querstege arretierbar sind, sowie im Wesentlichen senkrecht zu den Trennstegen (7) plattenartige Fachböden (8) angeordnet werden können, wobei
der Trennsteg mehrere Ausnehmungen (9) aufweist, in denen jeweils ein Fachboden (8) gehaltert werden kann und wobei am seitlichen Ende jeder Ausnehmung ein durchgehender, steifer Stützbereich (10) und an dem gegenüberliegenden seitlichen Ende je eine mit der jeweiligen Ausnehmung (9) verbundene Einführöffnung (11) zum Einsetzen eines Fachbodens (8) vorgesehen sind und wobei die Einführöffnungen mit je einem federnden Zungenelement (12) zum teilweisen Verschließen der jeweiligen Einführöffnung (11) und zum Festhalten des jeweiligen eingesetzten Fachbodens (8) versehen sind, wobei auf derjenigen Seite des Zungenelements (12), die der Ausnehmung (9) abgewandt ist, ein Freiraum (13) vorgesehen ist, in den das federnde Zungenelement (12) beim Einsetzen und Herausnehmen eines Fachbodens (8) elastisch ausweichen kann,
**dadurch gekennzeichnet,**
- **dass** das federnde Zungenelement (12) sich im Wesentlichen von der Einführöffnung (11) aus bis zu dem gegenüberliegenden Stützbereich (10) des Trennstegs (7) erstreckt, und
- **dass** das eine Ende des Zungenelements (12) mit dem Rand der Einführöffnung (11) und das andere Ende mit dem Stützbereich (10) verbunden ist.

2. Trennsteg nach Anspruch 1, **dadurch**
**gekennzeichnet, dass** der Trennsteg (7) aus Kunststoff besteht.

3. Trennsteg nach Anspruch 2, **dadurch**
**gekennzeichnet, dass** der Trennsteg (7) als einstückiges Teil ausgebildet ist.

4. Trennsteg nach Anspruch 3, **dadurch**
**gekennzeichnet, dass** das eine Ende des elastisch verformbaren Zungenelements (12) einstückig an den Rand der Einführöffnung (11) und das andere Ende ebenfalls einstückig an den Stützbereich (10) angeformt ist.

5. Trennsteg nach einem der Ansprüche 1 bis 4, **dadurch gekennzeichnet, dass** die dem federnden Zungenelement (12) gegenüberliegende Begrenzungswand (14) der Ausnehmung (9) der äußeren Kontur des einzusetzenden plattenförmigen Fachbodens (8) angepasst ist.

6. Trennsteg nach einem der Ansprüche 1 bis 5, **dadurch gekennzeichnet, dass** das Zungenelement (12) auf der der Ausnehmung (9) zugewandten Seite eine vorspringende Nase (15) aufweist.

7. Trennsteg nach Anspruch 6, **dadurch**
**gekennzeichnet, dass** die an dem Zungenelement (12) vorgesehene vorspringende Nase (15) nahe dem inneren Ende der Einführöffnung (11) angeordnet ist.

8. Trennsteg nach Anspruch 7, **dadurch**
**gekennzeichnet, dass** die vorspringende Nase (15) bei eingesetztem Fachboden (8) im Bereich der der Einführöffnung (11) zugewandten Seite des Fachbodens (8) unter Vorspannung an diesem anliegt.

9. Trennsteg nach einem der Ansprüche 1 bis 8, **dadurch gekennzeichnet, dass** alle Einführöffnungen (11) der Ausnehmungen (9) zu derselben Seite des Trennstegs hin öffnend angeordnet sind.

10. Trennsteg nach einem der Ansprüche 1 bis 9, **dadurch gekennzeichnet, dass** die Hauptabmessung des Freiraums (13) grösser ist als die entsprechende Hauptabmessung der zugehörigen Ausnehmung (9), und vorzugsweise mindestens 60% der Abmessung des Trennstegs in Kettenlängsrichtung beträgt.

11. Trennsteg nach einem der Ansprüche 1 bis 10, **dadurch gekennzeichnet, dass** das Zungenelement (12) auf der der Ausnehmung (9) zugewandten Seite einen Rastvorsprung (16) aufweist, zum Festhalten eines Fachbodens in Richtung quer zur Kettenlängsrichtung.

12. Energieführungskette aus schwenkbar miteinander verbundenen Kettengliedern, welche zwei Seitenlaschen (2, 3) aufweisen, die zumindest bei einigen Kettengliedern durch zwei Querstege (4, 5) miteinander verbunden sind und einen Führungskanal (6) für Leitungen definieren, umfassend
vertikale Trennstege (7), die zwischen den Querstegen (4, 5) angeordnet und an mindestens einem Quersteg (4,5) arretiert sind, sowie
horizontale, plattenartigen Fachböden (8), die in Ausnehmungen (9) der Trennstege (7) gehaltert sind, wobei an einem seitlichen Ende jeder Ausnehmung ein durchgehender, steifer Stützbereich (10) und an dem gegenüberliegenden seitlichen Ende je eine mit der jeweiligen Ausnehmung (9) verbundene Einführöffnung (11) zum Einsetzen eines Fachbodens (8) vorgesehen sind und wobei die Einführöffnungen mit je einem federnden Zungenelement (12) zum teilweisen Verschließen der jeweiligen Einführöffnung (11) und zum Festhalten des jeweiligen eingesetzten Fachbodens (8) versehen sind,
**dadurch gekennzeichnet, dass**
mindestens ein Trennsteg nach einem der Ansprüche 1 bis 11 vorgesehen ist.

## Claims

1. A separator (7) for an energy guiding chain comprising pivotably interconnected chain links which have two side plates (2, 3) which at least in some chain links are connected together by two transverse bars (4, 5) and define a guide passage (6) for lines, in which separators (7) can be arranged between the transverse bars (4, 5) and can be arrested at at least one of the transverse bars and plate-like compartment bottoms (8) can be arranged substantially perpendicularly to the separators (7),
wherein the separator has a plurality of recesses (9) in which a respective compartment bottom (8) can be held and wherein provided at the lateral end of each recess is a continuous rigid support region (10) and provided at the opposite lateral end is a respective insertion opening (11) connected to the respective recess (9) for insertion of a compartment bottom (8) and wherein the insertion openings are provided with a respective resilient tongue element (12) for partially closing the respective insertion opening (11) and for securing the respective inserted compartment bottom (8), wherein provided on that side of the tongue element (12), that is facing away from the recess (9), is a free space (13) into which the resilient tongue element (12) can elastically deflect upon insertion and removal of a compartment bottom (8),
**characterised in that**
- the resilient tongue element (12) extends substantially from the insertion opening (11) to the opposite support region (10) of the separator (7), and **in that**
- the one end of the tongue element (12) is connected to the edge of the insertion opening (11) and the other end to the support region (10).

2. A separator according to claim 1 **characterised in that** the separator (7) comprises plastic.

3. A separator according to claim 2 **characterised in that** the separator (7) is in the form of a one-piece part.

4. A separator according to claim 3 **characterised in that** the one end of the elastically deformable tongue element (12) is integrally formed at the edge of the insertion opening (11) and the other end is also integrally formed at the support region (10).

5. A separator according to one of claims 1 to 4 **characterised in that** the delimiting wall (14) of the recess (9), that is opposite to the resilient tongue element (12), is adapted to the external contour of the plate-shaped compartment bottom (8) to be inserted.

6. A separator according to one of claims 1 to 5 **characterised in that** on the side facing towards the recess (9) the tongue element (12) has a projecting nose (15).

7. A separator according to claim 6 **characterised in that** the projecting nose (15) on the tongue element (12) is arranged near the inner end of the insertion opening (11).

8. A separator according to claim 7 **characterised in that** when the compartment bottom (8) is inserted the projecting nose (15) bears against the compartment bottom (8) under a prestressing in the region of the side of the compartment bottom (8), that is facing towards the insertion opening (11).

9. A separator according to one of claims 1 to 8 **characterised in that** all insertion openings (11) of the recesses (9) open towards the same side of the separator.

10. A separator according to one of claims 1 to 9 **characterised in that** the main dimension of the free space (13) is larger than the corresponding main dimension of the associated recess (9), and is preferably at least 60% of the dimension of the separator in the longitudinal direction of the chain.

11. A separator according to one of claims 1 to 10 **characterised in that** on the side facing towards the recess (9) the tongue element (12) has a latching projection (16) for securing a compartment bottom in a direction transversely relative to the longitudinal direction of the chain.

12. An energy guiding chain comprising pivotably interconnected chain links which chain links have two side plates (2, 3) which at least in some chain links are connected together by two transverse bars (4, 5) and define a guide passage (6) for lines, including
vertical separators (7) which are arranged between the transverse bars (4, 5) and are arrested at at least one transverse bar (4, 5), and
horizontal plate-like compartment bottoms (8) which are held in recesses (9) provided in the separators (7),
wherein provided at a lateral end of each recess is a continuous rigid support region (10) and provided at the opposite lateral end is a respective insertion opening (11) connected to the respective recess (9) for insertion of a compartment bottom (8) and wherein the insertion openings are provided with a respective resilient tongue element (12) for partially closing the respective insertion opening (11) and for securing the respective inserted compartment bottom (8),
**characterised in that** there is provided at least one separator according to one of claims 1 to 11.

## Revendications

1. Bande de séparation (7) pour une chaîne porte-câbles constituée de maillons de chaîne reliés entre eux de manière pivotante, qui présentent deux pattes latérales (2, 3) qui sont reliées entre elles au moins pour certains maillons de chaîne par deux traverses (4, 5) et qui définissent un canal de guidage (6) pour des câbles, dans lequel des bandes de séparation (7) peuvent être disposées entre les traverses (4, 5) et peuvent être bloquées sur au moins l'une des traverses, et des étagères (8) en forme de plaques peuvent être disposées sensiblement perpendiculairement aux séparateurs (7),
la bande de séparation présentant plusieurs évidements (9) dans chacun desquels une étagère (8) peut être maintenue, et à l'extrémité latérale de chaque évidement une zone de support rigide continue (10) et, à l'extrémité latérale opposée, une ouverture d'introduction (11) reliée à l'évidement respectif (9) pour l'insertion d'une étagère (8) sont prévues, et
les ouvertures d'introduction étant pourvues chacune d'un élément de languette élastique (12) pour la fermeture partielle de l'ouverture d'introduction respective (11) et pour le maintien de l'étagère respective insérée (8),
un espace libre (13) étant prévu sur le côté de l'élément de languette (12) qui est détourné de l'évidement (9), dans lequel l'élément de languette élastique (12) peut s'écarter élastiquement lors de l'insertion et du retrait d'une étagère (8),
**caractérisée en ce que**
- l'élément de languette élastique (12) s'étend essentiellement depuis l'ouverture d'introduction (11) jusqu'à la zone de support (10) opposée de la bande de séparation (7) et
- **en ce qu'**une extrémité de l'élément de languette (12) est reliée au bord de l'ouverture d'introduction (11) et l'autre extrémité est reliée à la zone de support (10).

2. Bande de séparation selon la revendication 1, **caractérisée en ce que** la bande de séparation est en matière plastique.

3. Bande de séparation selon la revendication 2, **caractérisée en ce que** la bande de séparation (7) est conçu comme une pièce monobloc.

4. Bande de séparation selon la revendication 3, **caractérisée en ce qu'**une extrémité de l'élément de languette (12) élastiquement déformable est formée d'un seul tenant sur le bord de l'ouverture d'introduction (11) et l'autre extrémité est également formée d'un seul tenant sur la zone de support (16) .

5. Bande de séparation selon l'une des revendications 1 à 4, **caractérisée en ce que** la paroi de délimitation (14) de l'évidement (9) opposée à l'élément de languette élastique (12) est adaptée au contour extérieur de l'étagère en forme de plaque (8) à insérer.

6. Bande de séparation selon l'une des revendications 1 à 5, **caractérisée en ce que** l'élément de languette (12) présente un ergot (15) en saillie sur le côté tourné vers l'évidement (9).

7. Bande de séparation selon la revendication 6, **caractérisée en ce que** l'ergot en saillie (15) prévu sur l'élément de languette (12) est situé à proximité de l'extrémité intérieure de l'ouverture d'insertion (11).

8. Bande de séparation selon la revendication 7, **caractérisée en ce que**, lorsque l'étagère (8) est en place, l'ergot en saillie (15) s'applique contre l'étagère (8) sous précontrainte dans la zone du côté de l'étagère (8) tourné vers l'ouverture d'introduction (11).

9. Bande de séparation selon l'une des revendications 1 à 8, **caractérisée en ce que** toutes les ouvertures d'introduction (11) des évidements (9) sont disposées de manière à s'ouvrir vers le même côté de la bande de séparation.

10. Bande de séparation selon l'une des revendications 1 à 9, **caractérisée en ce que** la dimension principale de l'espace libre (13) est supérieure à la dimension principale correspondante de l'évidement (9) associé et représente de préférence au moins 60% de la dimension de la bande de séparation dans la direction longitudinale de la chaîne.

11. Bande de séparation selon l'une des revendications 1 à 10, **caractérisée en ce que** l'élément de languette (12) présente une saillie d'encliquetage (16) sur le côté tourné vers l'évidement (9), pour maintenir une étagère dans une direction transversale à la direction longitudinale de la chaîne.

12. Chaîne porte-câble constituée de maillons de chaîne reliés entre eux de manière pivotante, qui présentent deux pattes latérales (2, 3) qui sont reliées entre elles au moins pour certains maillons de chaîne par deux traverses (4, 5) et qui définissent un canal de guidage (6) pour des câbles, comprenant
des bandes de séparation verticales (7), qui sont disposées entre les traverses (4, 5) et sont bloquées sur au moins une traverse (4, 5), ainsi que
des étagères horizontales (8) en forme de plaques, qui sont maintenues dans des évidements (9) des bandes de séparation (7),
une zone de support rigide continue (10) étant prévue à une extrémité latérale de chaque évidement et une ouverture d'introduction (11) reliée à l'évidement (9) respectif étant prévue à l'extrémité latérale opposée pour l'introduction d'une étagère (8) et les ouvertures d'introduction étant pourvues chacune d'un élément à languette élastique (12) pour la fermeture partielle de l'ouverture d'introduction (11) respective afin de maintenir l'étagère (8) respective insérée,
**caractérisée en ce**
**qu'**au moins une bande de séparation selon l'une des revendications 1 à 11 est prévue.
